Europäisches Patentamt

European Patent Office

Office européen des brevets

(11) Veröffentlichungsnummer: **0 090 373**
A2

(12) **EUROPÄISCHE PATENTANMELDUNG**

(21) Anmeldenummer: 83102990.5

(22) Anmeldetag: 25.03.83

(51) Int. Cl.³: **B 29 B 3/04,** B 29 C 29/00

(30) Priorität: 25.03.82 DE 3210974

(43) Veröffentlichungstag der Anmeldung: 05.10.83
Patentblatt 83/40

(84) Benannte Vertragsstaaten: **AT BE CH DE FR GB IT LI LU NL SE**

(71) Anmelder: **AluPlast GmbH, Ostrampe, D-5440 Mayen (DE)**

(72) Erfinder: **Buzga, Heinrich, Ing. grad., Höderlinstrasse 4, D-4048 Grevenbroich (DE)**
Erfinder: **Eschelbach, Bernd, Dipl.-Ing., Eupener Strasse 3, Eynatten (BE)**

(74) Vertreter: **Patentanwälte Zellentin, Zweibrückenstrasse 15, D-8000 München 2 (DE)**

(54) Trocknen von Kunststoffolienschnitzeln.

(57) Die vorliegende Erfindung betrifft ein Verfahren und eine Vorrichtung zum Entwässern von tropfnassen Kunststoff-Folienschnitzeln. Dabei wird dieses Material einer konischen Schneckenpresse zugeführt. Am Ausgang der Schneckenpresse befindet sich eine Querschnittsverengung, durch die das Material hindurch gepreßt wird. Die dabei entstehende Wärme wird zum Trocknen eingesetzt.

PATENTANWÄLTE
Z E L L E N T I N
ZWEIBRÜCKENSTR, 15
8000 MÜNCHEN 2

AluPlast GmbH,                                    25. März 1983
Ostrampe
5440 Mayen
Bundesrepublik Deutschland

Trocknen von Kunststoff-Folienschnitzel

Die vorliegende Erfindung betrifft ein Verfahren und eine
Vorrichtung zum Trocknen und Aufarbeiten von tropfnassen
Kunststoff-Folienschnitzeln.

Derartige Schnitzel fallen im Kunststoffrecycling an. Dabei
werden z.B. Agrarfolien zerkleinert, gereinigt und einer
Wiederverwendung zugeführt.

Die gereinigten Schnitzel müssen vor der dazu notwendigen
Granulierung sorgfältig getrocknet werden, da ggf. vorhandene
Wasseranteile im Extruder verdampfen und im Werkstück zu
Blasenbildung führen.

Bekannt sind zu diesem Zweck Zentrifugalentwässerer, bei
denen z.B. mit Hilfe von rotierenden Schaufeln zerkleinerte Kunststoffabfälle gegen die Wandung eines Siebkorbes geschleudert und so entwässert werden (siehe z.B. DE-OS 28 50 584). Eine Nachtrocknung ist in diesen Geräten stets erforderlich, da der Entwässerungsgrad nicht befriedigt. Zudem sind diese Geräte - nicht nur wegen der erforderlichen Endtrocknerstufe - aufwendig.

Die vorliegende Erfindung hat sich die Aufgabe gestellt, ein Verfahren und eine Vorrichtung zu entwickeln, mit deren Hilfe der Entwässerungsgrad wesentlich verbessert werden kann.

Die Lösung dieser Aufgabe besteht darin, daß die Schnitzel einer Schneckenpresse zugeführt werden, die von einem Siebkorb umgeben ist und daß sie unmittelbar nach Verlassen der Schnecke durch einen veränderbaren Spalt oder Ringraum gedrückt werden.

In der Schneckenpresse werden die Folienschnitzel zusammengedrückt und reiben aneinander. Durch den sich bildenden Druck und durch die Reibung der Teilchen aneinander entsteht soviel Wärme, daß die Teilchen in den thermoplastischen Zustand übergeben. Andererseits sorgt die Wärmeentwicklung auch für ein Abdampfen des Wassers.

Im Eingangsbereich der Schneckenpresse, dort wo der Druck noch nicht ausreicht, um die für eine Verdampfung des Wassers notwendige Wärmeentwicklung zu erzeugen, werden die vorentwässerten Teilchen schon soweit zusammengeschoben, daß das abpreßbare Wasser ausgequetscht wird. Die Restmenge, die adsorptiv an den Teilchen gebunden ist und mechanisch nicht entfernt werden kann ist danach gering genug, um bei dem bei der Bildung des Preßlings bzw. beim
Übergang in den thermoplastischen Zustand zu verdampfen.

Die den Spalt oder Ringraum verlassende zusammenhängende
Masse ist nunmehr trocken genug, um direkt granuliert und
weiterverarbeitet zu werden.

Gute Ergebnisse werden mit Schnecken erzielt, deren Durchmesser gleich der Steigung der Wendel ist.

Es wird vorgeschlagen, den Druck in der Vorrichtung allmählich
-kontinuierlich- zu steigern. Diese Steigerung des Drucks
ist dabei so zu bemessen, daß die maximale Temperatur- und
-Druckentwicklung erst im Ringraum oder Spalt eintritt.
So kann vermieden werden, daß Material zurückfließt und den
Siebkorb verstopft.

Im Prinzip ist es natürlich möglich, auf den Übergang in den
plastischen Zustand zu verzichten und lediglich entwässerte
Schnitzel auszustoßen.

Weitere Vorteile der vorliegenden Erfindung ergeben sich
dann, wenn direkt Preßlinge erzeugt werden, die
sofort Granuliervorrichtungen zugeführt werden können.

Hierzu sind auf die Schnecke einwirkende Drehmomente in Höhe
von ca. 900 - 1000 mkp erforderlich. Natürlich hängt dieser
Wert weitgehend von der chemischen Struktur der Kunststoffabfälle ab.

Die Viskosität des Preßlings kann herabgesetzt werden, wenn
Spalt oder Ringraum zusätzlich geheizt werden.

Die einfachste Art zu granulieren besteht darin, daß das Preßgut beim Verlassen von Spalt oder Ringraum durch eine Lochplatte gedrückt und z.B. mit Hilfe von umlaufenden Schneidwerkzeugen in körniges Gut überführt wird.

Bei geeigneter Temperatursteuerung und geeigneter Auspreßgeschwindigkeit können die die Lochplatte verlassenden Stränge auch von selbst abbröckeln und so granulieren. Das den Ringraum oder den Spalt verlassende Preßgut kann auch zur Preßgutauflösung in an sich bekannter Weise einem Heißluftgebläse zugeführt werden.

Sollte aus Gründen der Technologie und der Materialeigenschaften eine zusätzliche Restentwässerung erforderlich sein, so wird vorgeschlagen, das Preßgut einem Agglomerator mit Schneckenaustrag zuzuführen und das Agglomerat zu kühlen. Die Kühlung kann in vorteilhafter Weise auch unter Evakuieren vorgenommen werden.

Die Kühlung des Agglomerats kann in einfacher Weise durch Zufuhr von Kaltluft in den Raum zwischen Schnecke und den sie umgebenden Mantelraum vorgenommen werden.

Weiterhin kann das Preßgut auch direkt einem evakuierbaren Extruder zugeführt werden, wobei man das Vakuum zweckmäßigerweise nach Erreichen des plastischen Zustandes anlegt.

Die zur Durchführung des Verfahrens notwendige Vorrichtung besteht aus einer an sich bekannten Schneckenpresse mit Produktaufhalter. Diese weist eine konische Schnecke und einen diese in engem Abstand umgebenden Siebkorb auf. Der Gutaustrag besteht jedoch aus einem Spalt oder Ringraum, durch den ein durch Anpassung von dessen Abmessungen an das zu entwässernde Gut definierter Widerstand beim Durchpressen
des Materials durch diese Öffnung entsteht. Dieser Spalt
oder Ringraum ist somit kleiner als die Austrittsöffnung
am Ende der Schnecke.

Der Spalt oder Ringraum entsteht in einfacher Weise durch
einen rohrförmigen Ansatz an das Siebrohr und einen auf die
Welle montierten Stopfkern oder durch einen Ansatz, der
einen Spalt der gewünschten Dimension freiläßt. Im Eingangsbereich können zur Entwässerung und zum Entdampfen Öffnungen
vorgesehen sein.

Zudem kann der Ringraum an eine Vakuumpumpe angeschlossen
sein.

Außerdem kann der Austrittsbereich heizbar ausgeführt sein.

Um direkt zu Granulaten zu kommen, kann der Austritt mit
einer Lochplatte verschlossen sein.

Weiterhin kann an den Ringraum ein Heißluftgebläse angeschlossen
sein, dem saugseitig das entstandene Preßgut zugeführt wird.

Eine andere Möglichkeit zu Granulaten zu kommen, besteht darin,
daß an den Ringraum ein Agglomerator mit Schneckenaustrag und
Agglomeratkühlung angeschlossen ist.

Zusätzlich kann an den Agglomerator eine Vakuumpumpe angeschlossen sein.

An den Ausgang der Schneckenpresse (Spalt oder Ringraum) kann
auch direkt ein evakuierbarer Extruder angeschlossen werden.

Die vorliegende Erfindung wird anhand von Figuren näher erläutert.

Fig. 1 zeigt die erfindungsgemäße Schneckenpresse.

Fig. 2 zeigt die Schneckenpresse mit vorgeschalteter Reinigungsstufe und Heißluftgebläse.

Fig. 3 zeigt die Schneckenpresse mit Reinigungsstufe und
Agglomerator.

Fig. 4 zeigt die Schneckenpresse mit Reinigungsstufe und
Extruder.

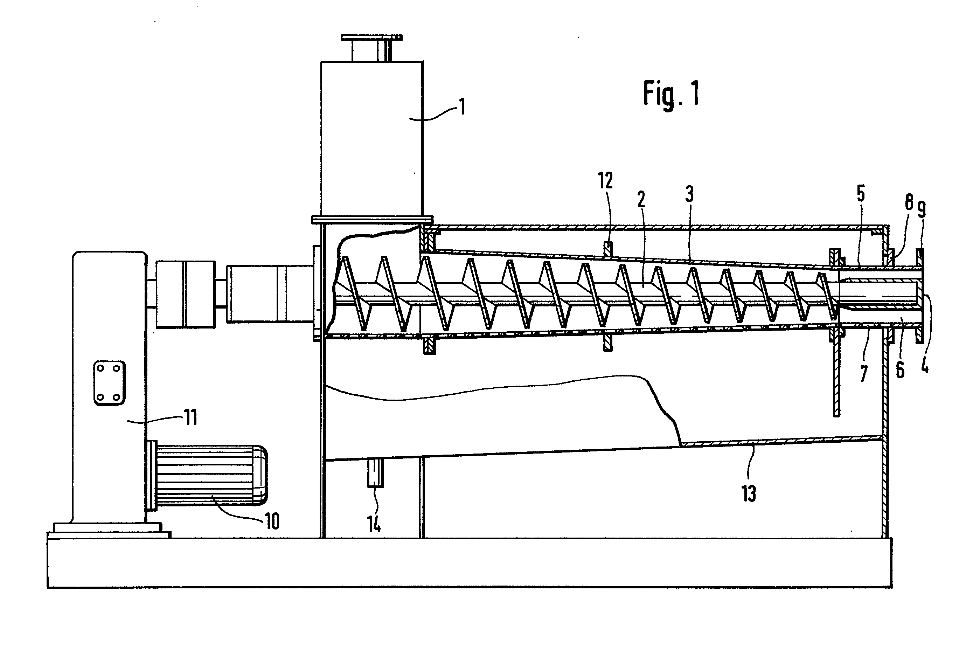

Fig. 1 zeigt die eine an sich bekannte Schneckenpresse mit
Guteintrag 1, konischer Schnecke 2 und diese in engem Abstand
umgebenden Siebkorb 3, ebenfalls konisch zum Austrag hin
kleiner werdend. Auf der Welle ist ein auswechselbarer
Stopfkern 4 angebracht. Dieser wird umgeben von einem an den
Siebkorb 3 angeflanschten Rohrabschnitt 5, der zusammen mit
dem Stopfkern den Ringraum 6 bildet.

Im Eingangsbereich weist der Rohrabschnitt Öffnungen 7 auf.
Der Rohrabschnitt ist zur Aufnahme von Drehmomenten gegen
das Gehäuse mit Hilfe des Bleches 8 abgestützt.

Zur Montage von weiteren an den Ringraum anschließenden
Vorrichtungen dient der Flansch 9. Motor 10 und Getriebe 11
sind für das erforderliche Drehmoment von etwa 900 - 1000 mkp
ausgelegt. Zur Aufnahme der hohen Drehmomente, die auf den
Siebkorb 3 wirken, dienen die Stützbleche 12. Zudem weist
der Siebkorb nicht dargestellte Produktaufhalter auf.

Die Entwässerung geschieht über das Bodenblech 13 und den
Ablauf 14.

Von entscheidender Bedeutung ist bei der vorbeschriebenen
Vorrichtung neben der Möglichkeit der direkten Weiterverarbeitung des Preßgutes durch hohen Entwässerungsgrad auch der
gegenüber der herkömmlichen Trocknung wesentlich niedrigere
Energiebedarf wegen des sich ergebenden hohen Wirkungsgrades.

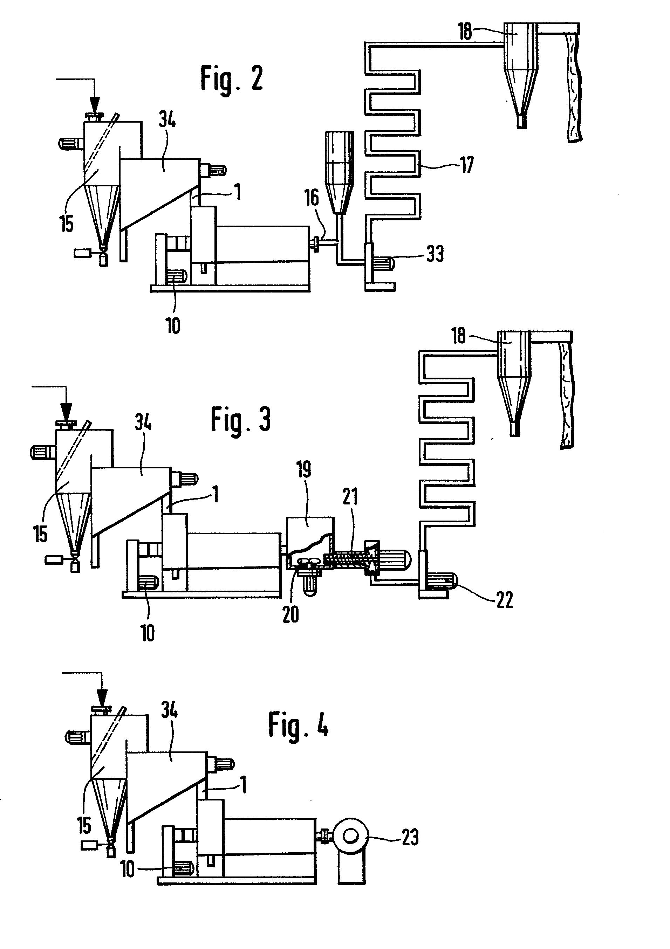

Fig. 2 zeigt die erfindungsgemäße Presse innerhalb einer
Kompaktanlage. Dabei ist der Entwässerungsstufe eine Vorreinigungsstufe 15 und zusätzlich eine Nachreinigungsstufe 34
vorgeschaltet. Der Ringraum 6 ist hier an ein Heißluftgebläse 33 saugseitig 16 angeschlossen. Das dabei sich auflösende Produkt gelangt über die Leitung 17 in einen
Produktabscheider 18.

Die Produktauflösung in der Heißluft dient hier auch einer
Restentwässerung. Da wegen des hohen Wirkungsgrades der Preßentwässerung nur noch sehr wenig Wasser - wenn überhaupt -
noch im Material vorhanden ist, braucht an die Leistungsfähigkeit des Heißluftgebläses keine hohen Anforderungen
gestellt zu werden. Entsprechend hoch kann natürlich auch
der Durchsatz bzw. gering die Verweilzeit des Materials sein.

Fig. 3 zeigt eine ähnliche Vorrichtung, bei der jedoch anstelle des Heißluftgebläses ein an sich bekannter Agglomerator
19 mit umlaufendem Messer 20, Schneckenaustrag 21 und Produktkühlung (Gebläse) 22 die Restentwässerung und Agglomerierung vornimmt.

Auch hier ist ein  Produktabscheider 18 vorgesehen.

Fig. 4 zeigt die Möglichkeit, an die Schneckenpresse und
den Spalt oder Ringraum direkt einen Extruder 23  anzuschließen.

Die Funktion der Vorrichtung ist folgende:

Über den Materialeintrag 1 gelangt   tropfnasses Material
(Folienschnitzel) auf die Schnecke 2. Die Schnecke weist
eine Steigung auf, die ihrem Durchmesser entspricht.

Das in den Raum zwischen Schneckenseele  und Siebkorb 3 gelangende Material wird in Richtung auf den Austrag hin bewegt.
Da Schnecke 2 und Siebkorb 3 konisch zulaufen, wird das Material
verdichtet und Wasser weitgehend abgepreßt.

An die Schnecke schließt sich ein Spalt oder Ringraum 6 an,
dessen freier Querschnitt nunmehr sprunghaft kleiner ist
als der freie Querschnitt am Schneckenende.

In diesen verringerten Querschnitt wird das vorgepreßte
Gut eingebracht, wobei es sich erwärmt.

Je nach Querschnitt kann die Erwärmung auch bis zum Erreichen
eines plastischen Zustandes führen.

Damit das Material wegen des ständig steigenden Druckes
nicht zu sehr entgegen der Transportrichtung zurückwandert,
werden mindestens im Endbereich der Schnecke angeordnete
Produktaufhalter z.B.in Form von an der Siebkorbwandung angebrachten Stegen vorgeschlagen.

Durch im an den Siebkorb 3 anschließenden Rohrabschnitt 5 befindliche Öffnungen 7, kann der entstehende Wasserdampf entweichen. Dieser schlägt sich an der Gehäusewandung nieder und wird zusammen mit dem abgepreßten Wasser ausgetragen.

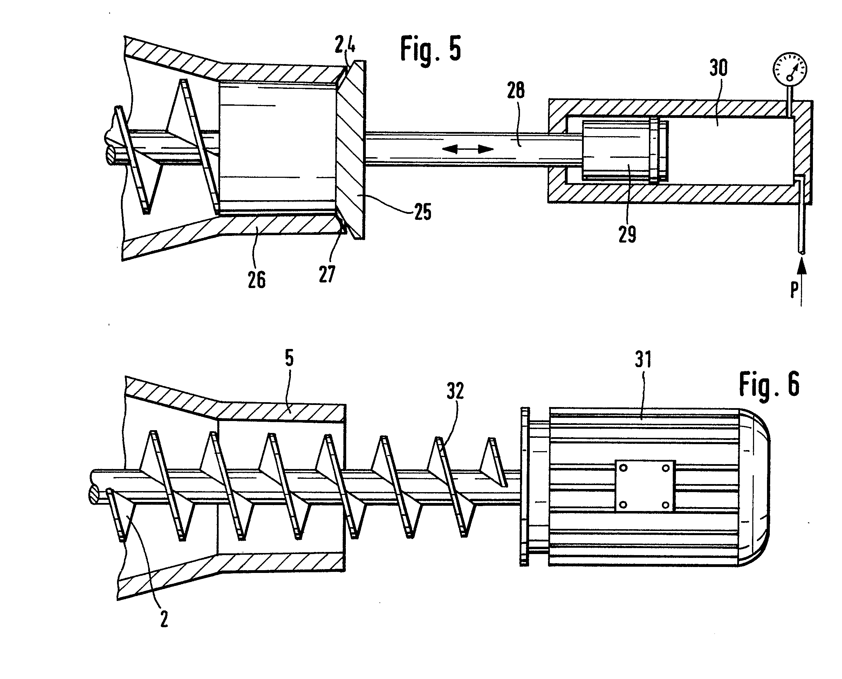

Als mit dem Ringraum 6 gleichwirkend wird im Rahmen der vorliegenden Erfindung eine Ausführungsform, wie in Fig. 5 und 6 gezeigt, angesehen.

Fig. 5: Der Ringraum kann durch eine einen Kegelabschnitt 24 aufweisende druckbelastete Platte 25 und einen im Bereich der Mündung 26 des die Schnecke umgebenden Rohres befindlichen Konus 27 gebildet werden. Die Platte 5 ist über einen Weggeher, hier als Schubstange 28 und Kolben 29 mit einem Druckraum 30 verbunden.
Der Druck im Druckraum 30 wird festgestellt und in Abhängigkeit von diesem kann die Leistung des Motors geregelt werden.

Fig. 6 zeigt eine konstruktive Lösung der Austrittszone des Rohrabschnittes 5, bei der anstelle des Stopfkerns 4 eine separat über einen Motor 31 getriebene Schnecke 32 in den Rohrabschnitt hineinragt.
Die Steigung der Schnecke 32 differiert von derjenigen der Schnecke 2, vorzugsweise ist sie kleiner. Mit Hilfe dieser sekundären Schnecke lassen sich die Druck- und Reibungsverhältnisse innerhalb des Rohrabschnitts 5 sehr präzise einstellen. Dies ist dann von Vorteil, wenn ein Anschmelzen und Verbacken der Teilchen unter Wasser- bzw. Dampfeinschluß vermieden werden muß, wie dies bei direktem Anschluß eines Extruders unter Fortfall eines Stopfwerks erforderlich ist.

- 10 -

Durchführungsbeispiel
-----------------------

Auf einer erfindungsgemäßen Vorrichtung mit den folgenden
Konstruktionsmerkmalen

| | |
|---|---|
| Länge der Schnecke | 1,6 m |
| Durchmesser der Schnecke Eingang | 250 mm |
| Durchmesser der Schnecke Ausgang | 150 mm |
| Steigung der Schnecke entspricht dem Durchmesser | |
| Ringraumlänge | 150 mm |
| Außendurchmesser des Ringraumes | 150 mm |
| Innendurchmesser des Ringraumes | 80 mm |
| Antrieb | 7,5 KW Motor |

wurde folgendes Material entwässert:

1.) PE Schnitzel       10/10 mm
    Stärke             200 µm
    Wasser             6 m³/h
    Restfeuchte        3 Gew.%
    Drehzahl der Schnecke   8,5 $Min^{-1}$

2.) PE Schnitzel       10/10 mm
    Stärke             25 µm
    mit einem Zellulose-
    anteil in Form von
    Fasern             1,5-2 Gew.%
    Drehzahl der Schnecke   6,5 $Min^{-1}$

0090373

Durchsatz

| | |
|---|---|
| PE-Schnitzel/Zellulosematerial | 182 kg/h |
| Wasser | 7 m³/h |
| Restfeuchte | 5 - 10 % |

Anmerkungen:

Die Restfeuchte war im zweiten Versuch,durch den Zelluloseanteil bedingt, höher.

Bei Verwendung der vorliegenden erfindungsgemäßen Vorrichtung
kann das die Vorrichtung verlassende Material direkt,d.h.
unter Verzicht auf ein Stopfwerk einem geeigneten Extruder
zugeführt werden. Derartige Extruder sind

- unter Einschließung der dortigen Offenbarung z.B. in den
nachstehenden Patentschriften beschrieben:

        US-PS 35 74 891
        US-PS 35 78 740
        DE-OS 14 54 808

Wesentlich an der vorliegenden Erfindung ist der in den
obigen Versuchen belegte verminderte Energieaufwand

Zur Entwässerung des obengenannten Materials in herkömmlichen Vorrichtungen (Sieb- oder Prallzentrifugen) ist
ein Energieaufwand von ca. 35 KW/h anzusetzen, wohingegen
die vorliegende Erfindung mit ca. einem Fünftel davon auskommt.

PAT░ ░ ░ ░
Z E ░ ░
ZWEI░ ░░░░░░░░ 15
░░░ MÜNCHEN 2

AluPlast GmbH,                    25. März 1983
Ostrampe                         Eu 83 180
5440 Mayen                       K/fr
Bundesrepublik Deutschland


## P a t e n t a n s p r ü c h e

1.)    Verfahren zum Trocknen und Aufarbeiten von tropfnassen
       Kunststoffolienschnitzeln, dadurch gekennzeichnet, daß
       die Schnitzel einer Schneckenpresse zugeführt werden,
       die von einem Siebkorb umgeben ist und daß sie unmittelbar nach Verlassen der Schnecke durch einen veränderbaren Spalt oder Ringraum gedrückt werden.


2.)    Verfahren nach Anspruch 1, dadurch gekennzeichnet, daß
       die Schnitzel einer Schnecke zugeführt werden, deren
       Steigung so groß ist wie ihr Durchmesser.


3.)    Verfahren nach Anspruch 1 - 2, dadurch gekennzeichnet,
       daß in der Schnecke ein kontinuierlich ansteigender
       Druck erzeugt wird.

4.) Verfahren nach Anspruch 1-3, dadurch gekennzeichnet, daß die Schnitzel nach Verlassen der Schnecke einem Ringspalt veränderlicher Breite oder in den Eingriffsbereich einer zweiten Schnecke mit unterschiedlicher Steigung und/oder unterschiedlicher Umdrehungsgeschwindigkeit zugeführt werden, wobei ein Verpressen unterhalb der Erweichungstemperatur unter Vermeidung von Einschlüssen von Wasser bzw. Dampf für die direkte Zufuhr in einen Extruder erfolgt.

5.) Verfahren nach Anspruch 1 - 4, dadurch gekennzeichnet, daß die Schnitzel in der Schnecke mit einem Drehmoment von etwa 900 - 1000 mkp beaufschlagt werden.

6.) Verfahren nach Anspruch 1 - 5, dadurch gekennzeichnet, daß der Ringraum oder der Spalt zusätzlich erwärmt werden.

7.) Verfahren nach Anspruch 1 - 5, dadurch gekennzeichnet, daß das plastisch gewordene Preßgut durch eine Lochplatte gedrückt und granuliert wird.

8.) Verfahren nach Anspruch 1 - 6, dadurch gekennzeichnet, daß zur Restentwässerung das Preßgut unter Preßgutauflösung in an sich bekannter Weise einem mit Heißluft beaufschlagten Gebläse zugeführt wird.

9.) Verfahren nach Anspruch 1 - 6, dadurch gekennzeichnet, daß zur Restentwässerung das Preßgut einem Gefäß mit einem schnell umlaufenden am Boden angeordneten Messerbalken (Agglomerator) zugeführt und anschließend mit Hilfe einer Schnecke ausgetragen und das so entstandene Agglomerat gekühlt wird.

0090373

10.) Verfahren nach Anspruch 9, dadurch gekennzeichnet, daß unter Vakuum agglomeriert wird.

11.) Verfahren nach Anspruch 9 und 10, dadurch gekennzeichnet, daß der Schnecke Kaltluft zugeführt wird.

12.) Verfahren nach Anspruch 1 - 6, dadurch gekennzeichnet, daß das Preßgut direkt einem Extruder zugeführt wird, wobei nach Erreichen des plastischen Zustandes evakuiert wird.

13.) Vorrichtung zur Durchführung des Verfahrens nach Anspruch 1 - 12, bestehend aus einer an sich bekannten Schneckenpresse mit Guteintrag (1), konischer Schnecke (2) und diese in engem Abstand umgebenden Siebkorb (3) mit Produktaufhalter und Antrieb, dadurch gekennzeichnet, daß an die Schnecke anschließend als Gutaustrag ein Spalt oder vorzugsweise Ringraum (6) zur Erzeugung eines definierten Widerstandes angeordnet ist.

14.) Vorrichtung nach Anspruch 13, dadurch gekennzeichnet, daß der Ringraum durch einen auf die Welle montierten Stopfkern (4) mit diesen umgebendem Rohrabschnitt (5) gebildet wird, der im Eingangsbereich zur Entwässerung und zum Entdampfen Öffnungen (7) aufweist.

15.) Vorrichtung nach Anspruch 13 - 14, dadurch gekennzeichnet, daß der Ringraum oder Spalt an eine Vakuumpumpe angeschlossen ist.

16.) Vorrichtung nach Anspruch 13 - 15, dadurch gekennzeichnet, daß der Ringraum (6) eine Heizung aufweist.

17.) Vorrichtung nach Anspruch 13-16, dadurch gekennzeichnet, daß
der Ringraum (6) mit einer Lochplatte oder mit einer
druckbelasteten, einen Kegelabschnitt (24) aufweisenden
Platte (25) verbunden ist, wobei an diese ein Weggeber
zur Steuerung des Schneckentriebs (10) angeschlossen
sein kann, oder daß in den Mündungsbereich (5) eine zweite
Schnecke (32) mit separatem Antrieb (31) hineinragt.

18.) Vorrichtung nach Anspruch 13 - 16, dadurch gekennzeichnet, daß an den Ringraum ein Heißluftgebläse (15)
angeschlossen ist, dem saugseitig (16) das Preßgut
zugeführt wird.

19.) Vorrichtung nach Anspruch 13 - 16, dadurch gekennzeichnet, daß an den Ringraum ein Agglomerator (19) mit
Schneckenaustrag (21) und Agglomeratkühlung (22) angeschlossen ist.

20.) Vorrichtung nach Anspruch 19, dadurch gekennzeichnet,
daß an den Agglomerator eine Vakuumpumpe angeschlossen
ist.

21.) Vorrichtung nach Anspruch 13 - 16, dadurch gekennzeichnet, daß an den Preßgutauslaß ein evakuierbarer Extruder
angeschlossen ist.

Fig. 1

Fig. 2

Fig. 3

Fig. 4

0090373

Fig. 5

Fig. 6